# FASCICULE DE BREVET EUROPEEN

(11) **EP 0 743 740 B1**
(45) Date de publication et mention de la délivrance du brevet: **21.07.1999**
(21) Numéro de dépôt: 96401072.2
(22) Date de dépôt: 15.05.1996
(51) Int. Cl.: H02K 19/36, H02K 11/04

(54) **Alternateur, notamment pour véhicule automobile, comportant un agencement de diodes de redressement**
Wechselstromgenerator, insbesondere für Kraftwagen, mit einer Gleichrichterdiodenanordnung
Alternator, in particular for automobile vehicles, with a rectifier diode arrangement

(30) Priorité: 17.05.1995 FR 9505860
(43) Date de publication de la demande: 20.11.1996
(73) Titulaire: VALEO EQUIPEMENTS ELECTRIQUES MOTEUR, 94000 Créteil (FR)
(72) Inventeur: Abadia, Roger, 93360 Neuilly Plaisance (FR); Tarrago, Jean-Luc, 94380 Bonneuil S/Marne (FR)
(74) Mandataire: Le Forestier, Eric

(56) Documents cités:
- EP-A- 0 440 395
- DE-A- 3 012 636
- DE-U- 1 932 707
- FR-A- 2 441 286
- FR-A- 2 539 258
- US-A- 5 296 778
- SOVIET INVENTIONS ILLUSTRATED Section EI, Week 8632 22 Août 1986 Derwent Publications Ltd., London, GB; Class X11, AN 86-210931 XP002010652 & SU-A-1 201 967 (CAR ELECTR EQUIP INSTR) , 30 Décembre 1985

## Description

La présente invention concerne d'une façon générale les alternateurs notamment pour véhicules automobiles, et plus particulièrement un nouvel agencement de diodes de redressement d'un tel alternateur au voisinage du palier arrière de celui-ci.

Un alternateur présente généralement une structure composée de deux demi-coquilles ou paliers en métal, chaque palier recevant une extrémité d'un arbre de rotor, et un stator monté fixe sur les paliers.

Un tel alternateur comprend également un circuit de régulation et un jeu de diodes de redressement des tensions alternatives délivrées par les enroulements du stator.

Ces diodes sont en général montées à l'aide d'aménagements appropriés sur l'extérieur de l'un des paliers de l'alternateur, à savoir le palier dit arrière par opposition au palier avant situé du côté de la poulie d'entraînement de l'alternateur.

Une préoccupation lors de la conception d'un alternateur est de faire en sorte que l'agencement des diodes de redressement notamment ne vienne pas exagérément accroître l'encombrement axial de l'alternateur.

Pour réduire cet encombrement, dans le cadre d'un alternateur polyphasé comportant un jeu de diodes côté négatif et un jeu de diodes côté positif, dont les corps sont respectivement reliés à la masse et à une borne de sortie positive de l'alternateur, il est connu de braser les diodes côté négatif sur un dissipateur négatif rapporté directement sur l'extérieur du palier arrière de l'alternateur.

Une telle construction est connue du document EP-A-0 440 395 par exemple.

Mais il n'en reste pas moins que les diodes côté positif doivent se situer axialement à une certaine distance des diodes côté négatif, et que des moyens de connexion appropriés des diodes aux enroulements de stator de l'alternateur doivent être également logés au voisinage des diodes.

La présente invention vise à réduire encore l'encombrement axial de ce type d'alternateur.

Un objet secondaire de la présente invention est également d'améliorer le refroidissement d'au moins certaines diodes du circuit de redressement.

Elle propose à cet effet un alternateur, notamment pour véhicule automobile, du type comprenant un palier avant et un palier arrière sur lesquels sont fixés des enroulements de stator et recevant à rotation un arbre de rotor, et un circuit de redressement comprenant une pluralité de diodes de puissance comportant chacune un corps généralement cylindrique constituant une première borne de connexion et une queue s'étendant axialement à partir dudit corps et constituant une seconde borne de connexion, les diodes étant réparties en des premières diodes dont le corps est relié à la masse et en des secondes diodes dont le corps est relié à une borne de sortie de l'alternateur, les diodes étant fixées en place par brasage de leurs corps, et les premières diodes étant brasées sur un premier dissipateur rapporté sur le palier arrière de l'alternateur, tandis que les secondes diodes sont brasées sur un second dissipateur situé à l'extérieur et à distance du palier arrière, caractérisé en ce que le premier dissipateur est monté à l'intérieur dudit palier arrière, et en ce que ce dernier comporte des ouvertures pour les premières diodes, à travers lesquelles ces dernières font saillie vers l'extérieur.
- les queues des secondes diodes font saillie dans des ouvertures de passage d'air formées dans le palier arrière.
- l'alternateur comprend en outre un connecteur de diodes généralement plan s'étendant entre le palier arrière et le second dissipateur.
- ledit connecteur est réalisé par surmoulage de matière isolante sur un ensemble de conducteurs généralement plans, et il est prévu dans la matière isolante des ouvertures pour le passage des diodes débordant au-delà du palier et s'étendant à partir du second dissipateur.
- lesdites ouvertures formées dans la matière isolante du connecteur sont communes pour deux première et seconde diodes adjacentes.
- le connecteur comporte, en association avec deux diodes adjacentes disposées tête-bêche, un conducteur faisant saillie de part et d'autre du plan dudit connecteur, lesdits parties en saillie étant reliées respectivement aux queues desdites diodes adjacentes.

Des aspects préférés, mais non limitatifs, de l'alternateur selon l'invention sont les suivants :

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
la figure 1 est une vue partielle en coupe axiale d'un alternateur selon l'invention, et
la figure 2 est une vue partielle en bout de l'alternateur selon l'invention.

En référence aux dessins, on a représenté une partie d'un alternateur selon l'invention, et en particulier de sa région arrière, à l'opposé de la poulie d'entraînement.

Le palier arrière est globalement désigné par la référence 10. Il comprend une âme cylindrique 11 définissant un logement pour un roulement à billes (non représenté) reçu sur un arbre de rotor 40 portant deux bagues collectrices 41, 42.

L'âme 11 est prolongée radialement par un voile 13 dans lequel sont ménagées des ouvertures d'air 14 de disposition prédéterminée pour le refroidissement de l'alternateur.

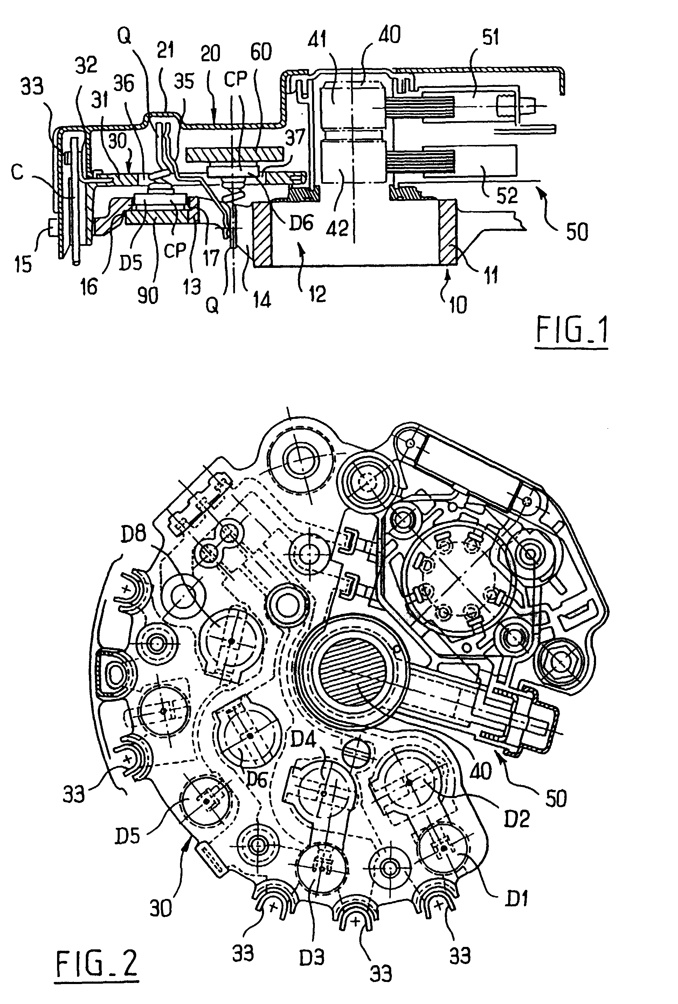

A proximité du bord radialement extérieur du voile 13 sont pratiquées des ouvertures généralement circulaires 15 pour le passage de conducteurs C, convenablement isolés, destinés à relier les phases et le neutre d'un stator triphasé (non représenté) de l'alternateur à un circuit de redressement. Ce circuit de redressement comprend, de façon classique, trois paires de diodes D1, D2, D3, D4, D5 et D6 et une paire de diodes supplémentaires D7, D8 qui sont en l'espèce brasées, les unes sur un premier support-dissipateur 90 rapporté à l'intérieur du voile 13 du palier arrière 10 (lui-même à la masse), et les autres sur un second support-dissipateur (indiqué en partie en 60 sur la figure 1) isolé du palier 10, la tension continue de sortie de l'alternateur étant disponible entre le premier dissipateur (ou le palier arrière) et le second dissipateur.

Les diodes sont reliées entre elles et aux conducteurs C par l'intermédiaire d'un connecteur, globalement désigné par la référence 30, comportant un corps en forme générale de plaque 31 en matériau isolant, surmoulé sur un ensemble de conducteurs plats.

Quatre de ces conducteurs, indiqués en 32 et destinés à la connexion électrique avec les conducteurs C, débordent radialement vers l'extérieur en étant aménagés à leurs extrémités libres sous forme de pince-fils 33 pour les conducteurs C.

On a également représenté un élément porte-balais et porte-régulateur 50, incluant notamment deux unités porte-balais 51, 52 au droit des bagues collectrices 41, 42 de l'arbre 40.

L'alternateur comporte également un capot 20 en matériau isolant, conformé de manière à coiffer le palier arrière 10, les diodes D et leur connecteur 30 ainsi que l'élément 50.

Comme le montre la figure 1, chaque diode présente un corps généralement cylindrique CP comportant sur une face une couche de brasure pour pouvoir être fixée par brasage soit sur un support-dissipateur négatif 90 monté dans le palier arrière 10 (pour les diodes côté négatif), soit sur un support-dissipateur positif 60 (pour les diodes côté positif) fixé à l'extérieur et à distance du palier.

Le corps CP de chaque diode constitue une première borne de connexion de celle-ci, tandis que sa seconde borne de connexion est constituée par une queue Q s'étendant axialement à partir du corps CP.

Comme on l'observe sur la figure 1, qui montre la disposition d'une paire de diodes D5, D6, la diode côté négatif D5 est brasée sur le dissipateur négatif 90, et ce dernier s'étend, selon un aspect de l'invention, du côté intérieur du palier (au-dessous sur la figure 1), dans un logement approprié 17 formé dans sa face interne. Le corps CP de la diode D5 fait saillie vers l'extérieur à travers une ouverture 16 formée dans le palier 10 au droit du logement 17, et la queue Q de la diode fait saillie à travers une ouverture 36 formée en un emplacement correspondant dans le connecteur plat 30. Cette queue se prolonge au-delà du plan général du dissipateur positif 60, et un dégagement 21 est pratiqué dans le capot 20, en matériau isolant, pour accueillir l'extrémité saillante de ladite queue.

Par ailleurs, la diode côté positif D6 est brasée sur le dissipateur 60 dans la direction opposée, les deux diodes de la paire adoptant ainsi une position tête-bêche.

La partie du corps CP de la diode D6 qui s'étend, en direction du palier 10, au-delà du dissipateur 60 fait saillie dans une ouverture 37 spécialement formée dans le connecteur 30, cette ouverture 37 pouvant être commune avec l'ouverture 36 précitée. La queue Q de la diode D6 s'étend en direction du palier 10 au-delà du connecteur 30 et pénètre dans l'ouverture de passage d'air 14 formée dans le palier 10 à l'emplacement correspondant.

On comprend que la disposition du dissipateur négatif 90, en retrait dans le volume de l'alternateur proprement-dit, en association avec les ouvertures 17, permet de diminuer la distance axiale entre le palier 10 et l'extrémité libre de la queue Q de la diode D5. Dans le même temps, dans la mesure ou une partie de la longueur axiale nécessaire pour la diode D6 est également prise en partie dans le volume de l'alternateur, le débordement axial de la diode D6 par rapport au palier 10 est également diminué. De la sorte, on minimise l'étendue axiale globale de l'alternateur.

On observera ici que, du fait que les diodes côté négatif se trouvent au droit d'ouvertures 14 de passage d'air de refroidissement, le refroidissement de ces diodes est amélioré.

Bien entendu, la même disposition est adoptée pour les autre paires de diodes, autant d'ouvertures 36, 37 étant formées dans le connecteur 30 et autant d'ouvertures de passage d'air 14 étant formées dans le palier.

Toujours en référence à la figure 1, on observe que les queues Q des deux diodes d'une même paire sont reliées ensemble par un conducteur 35 faisant partie du connecteur 30.

## Revendications

1. Alternateur, notamment pour véhicule automobile, du type comprenant un palier avant et un palier arrière (10) sur lesquels sont fixés des enroulements de stator et recevant à rotation un arbre de rotor (40), et un circuit de redressement comprenant une pluralité de diodes de puissance (D1-D8) comportant chacune un corps généralement cylindrique (CP) constituant une première borne de connexion et une queue (Q) s'étendant axialement à partir dudit corps et constituant une seconde borne de connexion, les diodes étant réparties en des premières diodes (D1, D3, D5, D7) dont le corps est relié à la masse et en des secondes diodes (D2, D4, D6, D8) dont le corps est relié à une borne de sortie de l'alternateur, les diodes étant fixées en place par brasage de leurs corps, et les premières diodes étant brasées sur un premier dissipateur (90) rapporté sur le palier arrière de l'alternateur, tandis que les secondes diodes sont brasées sur un second dissipateur (60) situé à l'extérieur et à distance du palier arrière (10), caractérisé en ce que le premier dissipateur (90) est monté à l'intérieur dudit palier arrière (10), et en ce que ce dernier comporte des ouvertures (17) pour les premières diodes (D1, D3, D5, D7), à travers lesquelles ces dernières font saillie vers l'extérieur.

2. Alternateur selon la revendication 1, caractérisé en ce que les queues (Q) des secondes diodes (D2, D4, D6, D8) font saillie dans des ouvertures de passage d'air (14) formées dans le palier arrière (10).

3. Alternateur selon l'une des revendications 1 et 2, caractérisé en ce qu'il comprend en outre un connecteur de diodes (30) généralement plan s'étendant entre le palier arrière (10) et le second dissipateur (60).

4. Alternateur selon la revendication 3, caractérisé en ce que ledit connecteur (30) est réalisé par surmoulage de matière isolante (31) sur un ensemble de conducteurs généralement plans et en ce qu'il est prévu dans la matière isolante des ouvertures (36, 37) pour le passage des diodes débordant au-delà du palier (10) et s'étendant à partir du second dissipateur (60).

5. Alternateur selon la revendication 4, caractérisé en ce que lesdites ouvertures (36, 37) formées dans la matière isolante du connecteur (30) sont communes pour deux première et seconde diodes adjacentes (D5, D6).

6. Alternateur selon l'une des revendications 3 à 5, caractérisé en ce que le connecteur (30) comporte, en association avec deux diodes adjacentes disposées tête-bêche, un conducteur (35) faisant saillie de part et d'autre du plan dudit connecteur, lesdits parties en saillie étant reliées respectivement aux queues (Q) desdites diodes adjacentes.

## Patentansprüche

1. Wechselstromgenerator, insbesondere für Kraftfahrzeuge, umfassend einen vorderen Lagerschild und einen hinteren Lagerschild (10), an denen Statorwicklungen befestigt sind und die eine drehend gelagerte Läuferwelle (40) aufnehmen, und umfassend eine Gleichrichterschaltung mit einer Mehrzahl von Leistungsdioden (D1-D8), die jeweils einen allgemein zylindrischen Körper (CP), der eine erste Anschlußklemme bildet, und ein Endstück (Q) aufweisen, das sich axial von dem besagten Körper aus erstreckt, wobei die Dioden auf erste Dioden (D1, D3, D5, D7), deren Körper mit der Masse verbunden sind, und auf zweite Dioden (D2, D4, D6, D8), deren Körper mit einer Ausgangsklemme des Wechselstromgenerators verbunden sind, verteilt sind, wobei die Dioden in ihrer Anbringungsposition durch Verlöten ihrer Körper befestigt sind und wobei die ersten Dioden an einem am hinteren Lagerschild des Wechselstromgenerators angesetzten ersten Kühlkörper (90) verlötet sind, während die zweiten Dioden an einem außen und in einem Abstand vom hinteren Lagerschild (10) angeordneten zweiten Kühlkörper verlötet sind, **dadurch gekennzeichnet**, daß der erste Kühlkörper (90) im Innern des besagten hinteren Lagerschilds (10) angebracht ist und daß diese Öffnungen (17) für die ersten Dioden (D1, D3, D5, D7) enthält, durch die diese nach außen vorstehen.

2. Wechselstromgenerator nach Anspruch 1, **dadurch gekennzeichnet**, daß die Endstücke (Q) der zweiten Dioden (D2, D4, D6, D8) in Luftdurchlaßöffnungen (14) vorstehen, die im hinteren Lagerschild (10) ausgebildet sind.

3. Wechselstromgenerator nach einem der Ansprüche 1 und 2, **dadurch gekennzeichnet,** daß er außerdem einen allgemein ebenen Diodenverbinder (30) umfaßt, der sich zwischen dem hinteren Lagerschild (10) und dem zweiten Kühlkörper (60) erstreckt.

4. Wechselstromgenerator nach Anspruch 3, **dadurch gekennzeichnet, daß** der besagte Verbinder (30) durch Aufformen von Isoliermaterial (31) auf einer Gruppe von allgemein ebenen Leitern ausgeführt ist und daß in dem Isoliermaterial Öffnungen (36, 37) für den Durchgang der Dioden vorgesehen sind, die über das Lagerschild (10) hinaus überstehen und sich vom zweiten Kühlkörper (60) aus erstrecken.

5. Wechselstromgenerator nach Anspruch 4 , **dadurch gekennzeichnet**, **daß** die besagten im Isoliermaterial des Verbinders (30) ausgebildeten Öffnungen (36, 37) für zwei benachbarte Dioden (D5, D6), eine erste und eine zweite Diode, gemeinsam vorgesehen sind.

6. Wechselstromgenerator nach einem der Ansprüche 3 bis 5, **dadurch gekennzeichnet,** daß der Verbinder (30) in Verbindung mit zwei entgegengesetzt angeordneten benachbarten Dioden einen Leiter (35) umfaßt, der auf beiden Seiten aus der Ebene des besagten Verbinders vorsteht, wobei die besagten vorstehenden Teile mit den Endstücken (Q) der besagten benachbarten Dioden verbunden sind.

## Claims

1. Alternator, notably for a motor vehicle, of the type comprising a front bearing and rear bearing (10) to which stator windings are fixed and rotatably receiving a rotor shaft (40), and a rectifier circuit comprising a plurality of power diodes (D1-D8) each having a roughly cylindrical body (CP) constituting a first connecting terminal and a tail (Q) extending axially from the said body and constituting a second connecting terminal, the diodes being divided into first diodes (D1, D3, D5, D7) whose body is connected to earth and second diodes (D2, D4, D6, D8) whose body is connected to an output terminal of the alternator, the diodes being fixed in place by brazing their bodies, and the first diodes being brazed to a first dissipator (90) attached to the rear bearing of the alternator, whilst the second diodes are brazed to a second dissipator (60) situated external to and at a distance from the rear bearing (10), characterised in that the first dissipator (10) is mounted inside the said rear bearing (10), and in that the latter has openings (17) for the first diodes (D1, D3, D5, D7), through which the latter project outwards.

2. Alternator according to Claim 1, characterised in that the tails (6) of the second diodes (D2, D4, D6, D8) project into air passage openings (14) formed in the rear bearing (10).

3. Alternator according to one of Claims 1 and 2,
characterised in that it also comprises a generally plane diode connector (30) extending between the rear bearing (10) and the second dissipator (60).

4. Alternator according to Claim 3, characterised in that the said connector (30) is produced by moulding insulating material (31) onto a set of generally plane conductors and that openings (36, 37) for passage of the diodes projecting beyond the bearing (10) and extending from the second dissipator (60) are provided in the insulating material.

5. Alternator according to Claim 4, characterised in that the said openings (36, 37) formed in the insulating material of the connector (30) are common for two adjacent first and second diodes (D5, D6).

6. Alternator according to one of Claims 3 to 5, characterised in that the connector (30) has, in association with two adjacent diodes disposed in opposite orientations, a conductor (35) projecting on each side of the plane of the said connector, the said projecting parts being connected respectively to the tails (Q) of the said adjacent diodes.
